# EUROPÄISCHE PATENTANMELDUNG

(11) **EP 1 335 189 A1**
(43) Veröffentlichungstag der Anmeldung: **13.08.2003**
(21) Anmeldenummer: 03002599.3
(22) Anmeldetag: 07.02.2003
(51) Int. Cl.: G01D 5/245, H02G 11/02

(54) **Messvorrichtung für relativ zueinander geführte Bauteile**

(30) Priorität: 07.02.2002 DE 10205089
(71) Anmelder: Micro Mechatronic Technologies AG, 57080 Siegen (DE)
(72) Erfinder: Hempelmann, Willi, Dipl. Ing., 57462 Olpe (DE)
(74) Vertreter: Klingseisen, Franz, Dipl.-Ing.

(57) **Zusammenfassung**

Bei einer Meßvorrichtung für relativ zueinander geführte Bauteile, insbesondere mit einer in einer Nut (3) eines Bauteils (4) geführten Paßfeder (2), wird in einer Ausnehmung (5) der Führung (3, 4) oder des Führungselements (2) ein Sensor integriert, der mit einem in dem Führungselement (2) oder in der Führung (3, 4) angebrachten Abtastelement (6) zusammenwirkt.

## Beschreibung

Die Erfindung betrifft eine Meßvorrichtung für relativ zueinander geführte Bauteile, insbesondere für eine in einer Nut geführte Feder einer Welle oder Achse.

Der Erfindung liegt die Aufgabe zugrunde, eine Meßvorrichtung beispielsweise für die Verschiebebewegung relativ zueinander geführter Bauteile so auszubilden, dass sie möglichst platzsparend in einer Vorrichtung untergebracht werden kann.

Dies wird erfindungsgemäß durch die Merkmale des Anspruchs 1 erreicht. Im Falle einer in einer Nut geführten Feder einer Achse oder Welle wird, ohne dass die gegebenen Abmessungen der Führung zwischen Nut und Feder geändert werden, in einer Ausnehmung der Feder ein Sensor angeordnet, der mit einem in der Nut oder in einer Ausnehmung der Nut angeordneten Abtastelement zusammenwirkt, um die Relativbewegung zwischen Feder und Nut zu messen. Durch die Integration von Sensor und Abtastelement im Führungselement und in der Führung wird eine Meßvorrichtung geschaffen, die zu keiner Veränderung der Abmessung der Vorrichtung führt, die mit einer solchen Führung versehen ist.

Die Erfindung wird beispielsweise anhand der Zeichnung näher erläutert. Es zeigen
Fig. 1 in einer perspektivischen Ansicht eine Nut-Feder-Führung einer Achse oder Welle,
Fig. 2 eine Draufsicht auf das Abtastelement in der Nut,
Fig. 3 in perspektivischer Ansicht eine Betätigungsvorrichtung mit der Meßvorrichtung nach den Fig. 1 und 2,
Fig. 4 eine Seitenansicht einer Kabeltrommel, und
Fig. 5 eine Draufsicht auf die Kabeltrommel.

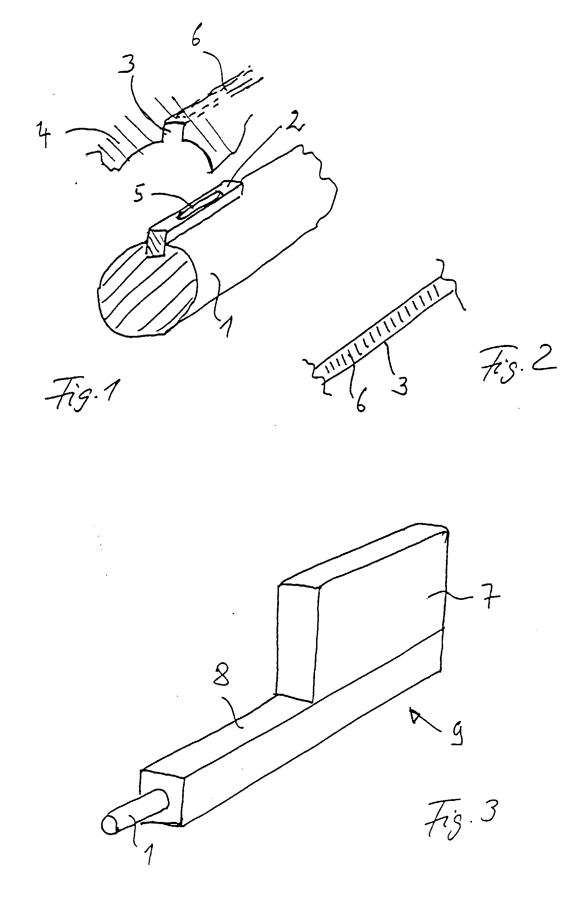

Fig. 1 zeigt eine in Achsrichtung verschiebbare Spindel 1 mit einer Feder 2, die in einer Nut 3 einer die Spindel 1 umgebenden Bohrung eines Bauteils 4 verschiebbar ist. In einer Ausnehmung 5 der Feder 2, beispielsweise auf der Außenseite der Feder 2, ist ein Sensor derart angeordnet, dass die für die Führungsfunktion erforderlichen Abmessungen der Feder 2 keiner Änderung bedürfen. Bei dem Ausführungsbeispiel nach Fig. 1 ist in der Ausnehmung 5 beispielsweise eine Diode angeordnet, die eine Skala 6 abtastet, die längs des Bodens der Nut 3 aufgebracht oder in einer entsprechenden Ausnehmung angeordnet ist.

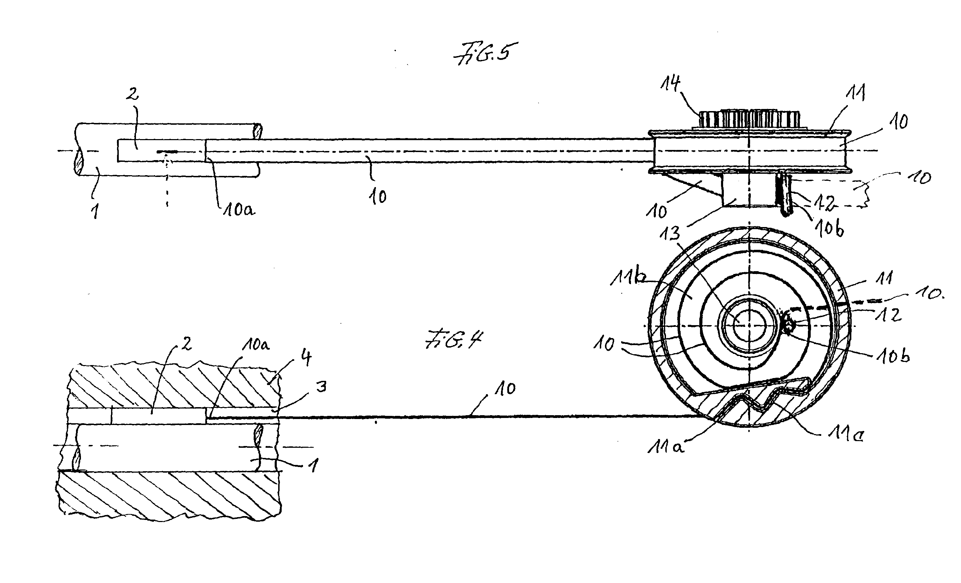

Bei einer Verschiebebewegung der Spindel 1 relativ zu dem mit der Bohrung und der Nut 3 versehenen Bauteil 4 wird über den in der Ausnehmung 5 angeordneten lichtemittierenden Sensor die Skala 6 abgetastet, worauf entsprechende Signale über in oder an der Spindel 1 verlaufende Leitungen (vgl. Fig. 4 und 5) an eine Auswertelektronik gegeben werden, welche die Verschiebebewegung misst. Die Skala 6 wird vorzugsweise in Form einer reflektierenden Leiste mit Quermarkierungen ausgebildet, wie Fig. 2 zeigt, die durch den lichtemittierenden Sensor in der Ausnehmung 5 abgetastet wird.

Fig. 3 zeigt schematisch eine Betätigungsvorrichtung 9, in deren Gehäuse 7 eine Auswertelektronik mit weiteren Meßeinrichtungen untergebracht ist und von dem eine langgestreckte Führung 8 vorsteht, in der die in Fig. 1 wiedergegebene Spindel 1 mittels einer Paßfeder 2 in einer Nut 3 geführt ist, um Positionsmessungen der Spindel 1 im Bereich von +/- 1 µm vorzunehmen. Die Spindel wird durch ein in dem Gehäuse 7 angeordnetes Stellelement in Achsrichtung verschoben.

Anstelle eines lichtemittierenden Sensors in dem Führungselement bzw. in der Paßfeder 2, der mit einem Abtastelement, beispielsweise der reflektierenden Leiste 6 in der Führung 3 zusammenwirkt, kann auch ein Magnetsensor oder ein anderer Sensor in der Ausnehmung 5 der Paßfeder 2 angeordnet werden, der mit einem entsprechenden Abtastelement in der Nut 3 zusammenwirkt.

Ebenso ist es möglich, bei einer mit einem Drehmoment beaufschlagten Welle 1 einen Drehmomentsensor in der Paßfeder 2 anzuordnen, der die von der Welle 1 auf die Führung 3, 4 ausgeübte Kraft zur Ermittlung des Drehmoments aufnimmt.

Es sind auch kapazitive Sensoren in einem Führungselement wie der Paßfeder 2 oder in der Führung bzw. Nut 3 möglich, die mit einem entsprechenden Abtastelement in dem relativ dazu beweglichen Bauteil zusammenwirken.

Anstelle der Anordnung der beschriebenen Meßvorrichtung in einer Paßfeder 2 und einer Nut 3 kann die Meßvorrichtung auch in einer anders gestalteten Führung zwischen zwei Bauteilen integriert werden, wobei ein Sensor in einer Ausnehmung der einen Führungsfläche und ein Abtastelement an der gegenüberliegenden Führungsfläche vorgesehen sein kann.

Fig. 4 und 5 zeigen ein Kabel 10, beispielsweise ein bandförmiges Kabel, das mit der Passfeder 2 bzw. dem in der Ausnehmung 5 der Passfeder 2 angeordneten Sensor elektrisch leitend verbunden und in der Nut 3 des die Spindel 1 umgebenden Bauteils 4 geführt ist. Damit das Kabel 10 bei der Vor- und Rückbewegung der Spindel 1 relativ zum feststehenden Bauteil 4 immer straff in der Nut 3 liegt und die sehr feinfühlige Verstellbewegung der Spindel 1 nicht behindert, ist das Kabel 10 in einer Kabeltrommel 11 geführt, wobei die Kabeltrommel 11 die Vor- und Rückbewegungen der Spindel 1 und damit des mit dieser verbundenen Kabelendes 10a kompensiert.

Die Kabeltrommel 11 ist auf einer stationären Achse 13 verdrehbar gelagert. Neben der Achse 13 ist ein Klemmstift 12 angebracht, wobei das Kabel 10 zwischen Achse 13 und Klemmstift 12 bei 10b durch Klemmung gehalten wird. Wie die Draufsicht in Fig. 5 zeigt, wird das Kabel aus der Ebene der Kabeltrommel seitlich herausgeführt und bei 10b zwischen Achse 13 und Klemmstift 12 festgeklemmt, wobei das Kabel 10 zu einer Anschlussstelle mit Steckelementen weitergeführt sein kann, wie durch gestrichelte Linien in Fig. 4 und 5 angedeutet ist.

Die Kabeltrommel 11 ist durch eine nicht dargestellte Drehfeder beaufschlagt, so dass die Kabeltrommel durch Federkraft im Gegenuhrzeigersinn um die Achse 13 gedreht wird.

Auf einer Seite ist die Kabeltrommel mit einem Zahnrad 14 versehen, das zum Feststellen der Position der Spindel 1 dient. Über das Zahnrad 14 wird der Drehwinkel der Kabeltrommel 11 über eine nicht dargestellte Einrichtung abgenommen und daraus die Lage der Spindel 1 ermittelt. Durch die Auswertelektronik wird eine Referenzmarke für die Position der Spindel 1 vorgegeben. Bei Inbetriebnahme wird die Spindel 1 durch einen Elektromotor in die Position der Referenzmarke bewegt, worauf dann die gewünschte Stellbewegung über die Spindel 1 vorgenommen werden kann. Über das Zahnrad 14 kann die Stellung der Spindel 1 relativ zur Referenzmarke festgestellt werden.

Die Kabeltrommel 11 ist beispielsweise topfförmig gestaltet, wobei auf der geschlossenen Seitenwand das Zahnrad 14 außen angebracht ist. Zur deutlicheren Wiedergabe ist die in Fig. 4 wiedergegebene offene Stirnseite der Kabeltrommel mit einer Schraffur versehen.

Das Kabel 10 wird ausgehend von dem mit dem Sensor verbundenen Ende 10a über den Außenumfang der Kabeltrommel 11 geführt, der einen etwa U-förmigen Querschnitt hat, wie die Draufsicht in Fig. 5 zeigt. An einer Stelle des Umfangs wird das Kabel 10 durch einen seitlich offenen Querschlitz 11a in der Umfangsfläche der Kabeltrommel nach innen in den Hohlraum 11b der Kabeltrommel geführt und in Wicklungen um die feststehende Achse 13 gelegt. Das Kabel ist bei 10b im Innern der Kabeltrommel durch den feststehenden Klemmstift 12 fixiert .

Wenn sich die Spindel 1 in den Fig. 4 und 5 nach links bewegt, wird das Kabel vom Außenumfang der Kabeltrommel abgezogen, wobei sich die Kabeltrommel entgegen der Kraft der nicht dargestellten Drehfeder dreht. Durch diese Drehbewegung im Uhrzeigersinn wird der in Wicklungen im Innern der Kabeltrommel vorhandene Kabelvorrat um die feststehende Achse 13 aufgewickelt.
Wenn die Spindel 1 nach rechts bewegt wird, wird die Kabeltrommel durch die Drehfeder im Gegenuhrzeigersinn gedreht, wobei das Kabel straff gehalten und um den Außenumfang der Trommel aufgewickelt wird. Gleichzeitig wird das Kabel im Innern der Kabeltrommel von der Achse 13 abgewickelt, wobei sich das Kabel an den Innenumfang der Kabeltrommel anlegen kann, wie dies in Fig. 4 angedeutet ist.

Vorzugsweise ist zur Zugentlastung des Kabels dieses durch einen gewellten Schlitz 11c am Übergang vom Außenumfang zum Innenumfang der Kabeltrommel geführt. Hierdurch wird durch Reibschluss des Kabels mit der Schlitzfläche eine Verschiebung des Kabels 10 relativ zum Umfang der Kabeltrommel vermieden.

Anstelle einer Spindel 1 kann auch ein Kolben oder ein anderes Betätigungselement mit einer Nut-Feder-Führung der beschriebenen Art ausgestattet werden.

## Patentansprüche

1. Meßvorrichtung für relativ zueinander geführte Bauteile, insbesondere mit einer in einer Nut (3) eines Bauteils (4) geführten Paßfeder (2), wobei in einer Ausnehmung (5) der Führung (3, 4) oder des Führungselements (2) ein Sensor integriert ist, der mit einem in dem Führungselement (2) oder in der Führung (3, 4) angebrachten Abtastelement (6) zusammenwirkt.

2. Vorrichtung nach Anspruch 1, wobei in einer Ausnehmung (5) in der Außenseite einer Paßfeder (2) ein lichtemittierender Sensor angeordnet ist, der eine reflektierende Leiste (6) in der Nut (3) des Bauteils (4) abtastet, um eine Längsverschiebung zwischen der mit der Paßfeder (2) versehenen Spindel (1) und der Führung (4) zu ermitteln.

3. Vorrichtung nach Anspruch 1, wobei ein magnetischer oder kapazitiver Sensor in den Führungsflächen zwischen relativ zueinander geführten Bauteilen integriert ist.

4. Vorrichtung nach den Ansprüchen 1 bis 3, wobei ein Kabel (10) mit dem an dem sich bewegenden Element (1) angebrachten Sensor verbunden und in der Nut (3) geführt ist, wobei das Kabel im Innern einer hohlen Kabeltrommel (11) befestigt ist, die auf dem Umfang eine Durchbrechung (11a) aufweist, durch die das um den Außenumfang der Kabeltrommel geführte Kabel auf deren Innenumfang geführt ist.

5. Vorrichtung nach Anspruch 4, wobei die Kabeltrommel (11) durch eine Drehfeder in Aufwickelrichtung des Kabels (10) beaufschlagt ist.

6. Vorrichtung nach den Ansprüchen 4 und 5, wobei eine Zugentlastung für das Kabel (10) in Form eines gewellten Schlitzes (11c) vorgesehen ist, der anschließend an die Durchbrechung (11a) am Umfang der Kabeltrommel in dieser ausgebildet ist.
